# EUROPEAN PATENT SPECIFICATION

(11) **EP 0 745 810 B1**
(45) Date of publication and mention of the grant of the patent: **24.10.2001**
(21) Application number: 96660014.0
(22) Date of filing: 22.05.1996
(51) Int. Cl.: F24B 1/06, F16B 5/00, E04B 1/61, F27D 1/00, E04B 2/08

(54) **Fixing device**
Verbindungsmittel
Connecteur

(30) Priority: 29.05.1995 FI 952617
(43) Date of publication of application: 04.12.1996
(73) Proprietor: Nunnanlahden Uuni Oy, 83940 Nunnanlahti (FI)
(72) Inventor: Hämäläinen, Risto, 83490 Nunnanlahti (FI)
(74) Representative: Helino, Timo Kalervo

(56) References cited:
- DE-A- 2 903 844
- DE-A- 4 227 170
- FI-B- 83 116
- FI-B- 83 559
- FR-A- 2 473 590
- US-A- 3 214 802

## Description

The present invention relates to a fixing device as defined in the preamble of claim 1.

In stoves constructed of stone, a known method for fixing adjacent stones to each other is to use U-shaped hooks. For the hook, the stones to be joined together are provided with bored holes and machined grooves in the locations where the hook is to go. A U-shaped steel hook is inserted into the holes to keep the stone parts together. Between stone courses placed on top of each other, grooves machined in the upper and lower stone courses are used, a metal fillet being inserted into the groove to keep the stone courses in position.

Using a hook to join adjacent stone parts together is difficult. Holes have to be bored in the stone parts and a fairly large groove has to be machined in them to accommodate the hook. In addition, with a hook it is difficult to achieve any tightening or pressure in the joint, with the result that the joint may have some play and involve problems regarding tightness. Substantially the same construction and the same problems are encountered in the fixing devices presented in Finnish patent specifications FI-B 83116 and FI-B-83559.

US patent 3,214,802 presents a flat fastener having a plurality of longitudinally spaced pairs of teeth extending mainly in the longitudinal direction of the elongated fastener. The fastener is particularly useful in wooden or woodlike material when the teeth bring the edge surfaces of the wood elements into abutting engagement and place the fastener body under tension.

The object of the present invention is to eliminate the drawbacks mentioned above. A specific object of the invention is to present a new type of fixing device by means of which adjacent stone parts can be joined and fixed together in a simple and effective manner.

As for the features characteristic of the invention, reference is made to the claims.

The fixing device of the invention consists of an elongated metal strip, made e.g. of flat iron, provided with gripping projections consisting of a series of sharp and straight locking edges on the surface of the metal strip, such that the strip can be placed in tongue-and-groove joint grooves machined in stone parts so that the gripping projections engage the stones, locking them together. According to the invention the metal strip has a single row of gripping projections arranged adjacent both ends of the metal strip, the locking edges being oriented to form a relatively small sharp angle with the direction perpendicular to the longitudinal direction of the metal strip in a plane parallel to the surface of the metal strip and in angles skewed in opposite directions at opposite ends of the metal strip so that when pushing the metal strip in the grooves the edges engage the sides of the grooves, locking the stone parts together.

In an embodiment of the invention, the gripping projections are lips punched from the metal strip. The lips may be produced by punching from the middle region of the metal strip or from its edge so that the edge of the lip cuts across the edge of the strip. It is also possible that the gripping projections are formed with a suitable pressing tool as protrusions or other form of irregularities on the surface of the metal strip. Thus, the essential feature of the fixing device of the invention is that the surface of the metal strip is provided with sharp-edged shapes projecting from the smooth and even surface, by means of which the edges of the groove in the stone can be suitably gripped.

Gripping projections are preferably provided on both surfaces of the metal strip.

When the strip is being inserted into the groove in the stone, the strip is tightened and draws the parts being joined towards each other. Thus, the locking edges are oriented in angles skewed in opposite directions at opposite ends of the strip.

The fixing device may be low enough to be completely pressed into the grooves of the stones to be joined, or it may be provided with a guiding part which, when the device is mounted in place, remains outside the grooves, serving to guide the stones above the joined stone parts into position.

The fixing device of the invention has significant advantages over known technology. Using this device, adjacent stone parts can be joined firmly together by means of ordinary tongue-and-groove joint grooves easily machined in the stones. Moreover, the fixing device enables the vertical joint between two adjacent stones to be effectively tightened and pressed, which is not possible with current joining devices.

In the following, the invention is described in detail by referring to the attached drawings, in which
Fig. 1 presents a perspective view of a fixing device as provided by the invention,
Fig. 2 presents the fixing device in Fig. 1 in side view,
Fig. 3 presents the fixing device in Fig. 1 in top view,
Fig. 4 presents a side view of another fixing device as provided by the invention,
Fig. 5 presents a side view of a third fixing device as provided by the invention,
Fig. 6 illustrates an application of the invention,
Fig. 7 illustrates another application of the invention,
Fig. 8 illustrates a third application of the invention,
Fig. 9 illustrates a fourth application of the invention,
Fig. 10 illustrates a fifth application of the invention, and
Fig. 11 illustrates a sixth application of the invention,

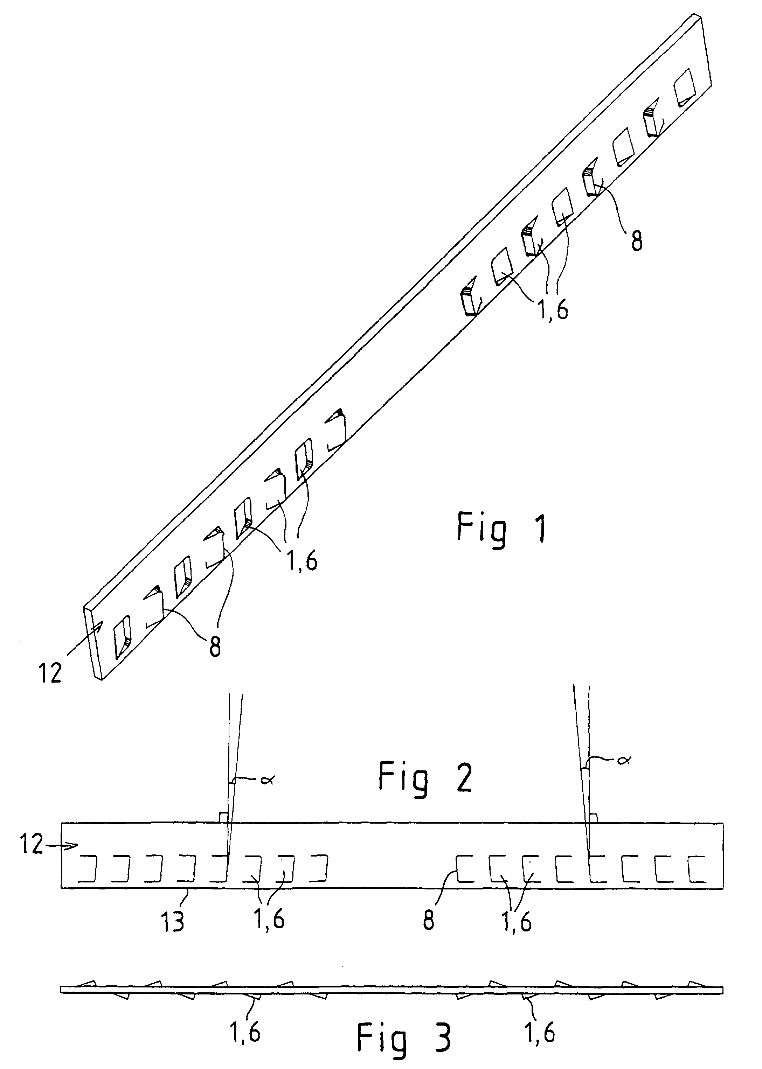

The fixing device as illustrated by Fig. 1-3 consists of a piece of flat iron, each end of which is provided with a series of gripping projections 1, which in this embodiment are lips 6, placed near one of the longitudinal edges. The lips have been formed by punching the metal strip so that the lip is cut clear of the strip on three sides, successive lips being turned in opposite directions. The lips in each end portion of the metal strip open towards its middle portion, i.e. they remain connected to the metal strip by their edges facing towards the end of the strip. Thus, the front edges of the lips, i.e. the edges turned outward and pointing toward the middle portion of the metal strip, form sharp locking edges 8. In addition, the locking edges are turned or tilted forward towards the middle portion of the metal strip from the direction perpendicular to the longitudinal direction of the metal strip so that they form a relatively small sharp angle α with the perpendicular direction. Thus, to mount the metal strip, the strip is pushed with its front edge 13 first into the groove, so that the locking edge slanting towards the middle part of the strip in the mounting direction draws and tightens the joint being made.

In this embodiment, gripping projections are only provided at one edge of the metal strip while the other edge is dead flat, forming a guiding part 12 which supports and guides the stones to be placed next on the stones already joined.

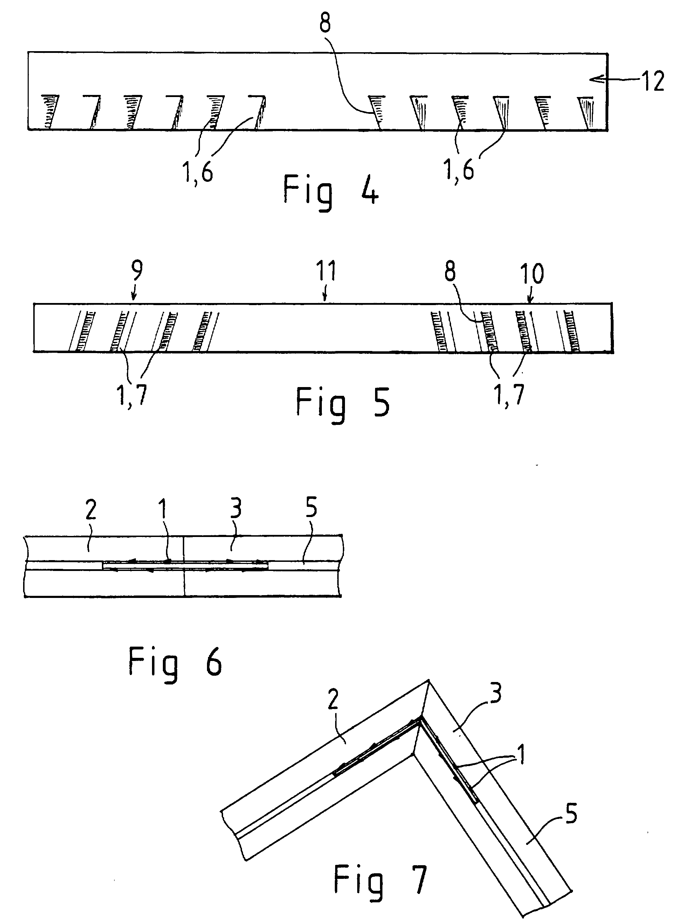

Fig. 4 presents another embodiment of the invention, in which the sharp-edged 8 gripping projections 1 are also lips 6 punched from the metal strip, but in this embodiment the lips start from the very edge of the metal strip.

Fig. 5 presents a third embodiment of the invention, in which the gripping projections are more pronouncedly placed only in the end portions 9 and 10 of the metal strip, leaving a portion 11 free of gripping projections in the middle. Moreover, in this embodiment the gripping projections are protrusions or ridges 7 formed by suitably pressing, said protrusions forming suitable sharp edges 8.

Fig. 6 presents the basic application of the invention, in which two stone parts 2 and 3 provided with a groove 5 are joined together end to end by pressing, forcing or striking a fixing device according to the invention into the grooves so that it extends in half into the groove 5 of one stone part 2 and in half into the groove 5 of the other stone part 3.

Fig. 7 presents an application in which the stone parts 2 and 3 are cut to a mitre, with a metal strip with gripping projections bent into a right angle.

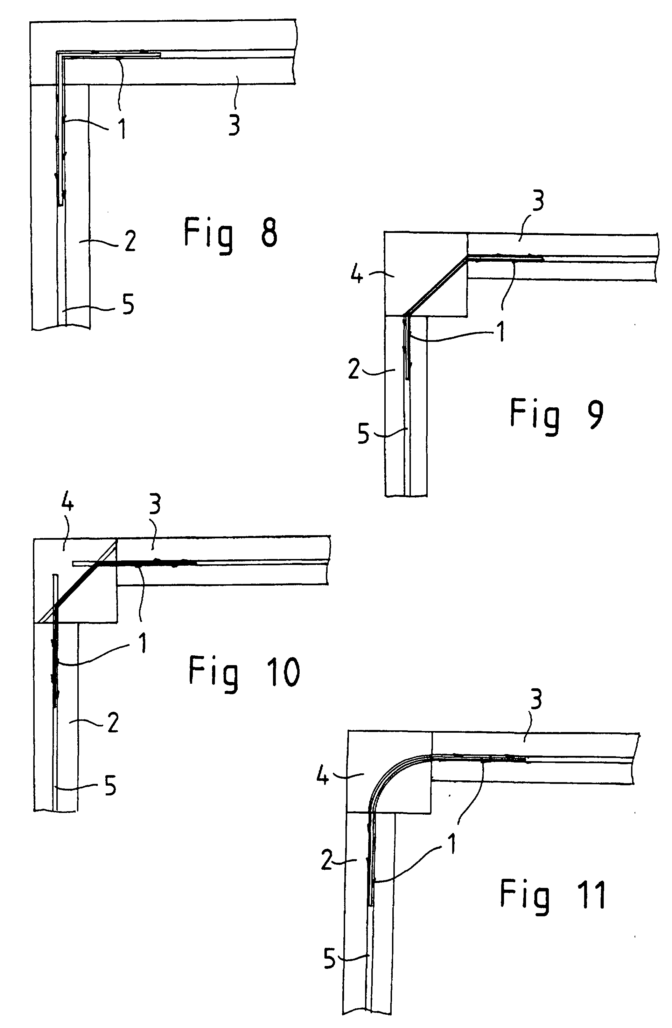

Fig. 8 shows a corner joint without a mitre, in which a fixing device bent into a right angle is placed in a straight groove in one 2 of the stone parts and in a rectangular groove in the other stone part 3.

Fig. 9 - 11 present three alternatives for implementing a corner joint with a corner stone 4 between stone parts 2 and 3 according to the invention. In other words, the fixing device of the invention allows a corner joint to be implemented in many different ways depending in each case on the most advantageous method by which suitable grooves can be machined in the stones to be joined. The fixing device of the invention can always be bent and broken into different shapes as it functions as a fixing and tightening element in the same way in different applications.

## Claims

1. Fixing device for fixing adjacent stone parts to each other, e.g. in soapstone structures, said fixing device consisting of an elongated metal strip provided with gripping projections (1) consisting of a series of sharp and straight locking edges (8) on the surface of the metal strip, which strip can be placed in grooves (5) machined in the stone parts so that the gripping projections engage the stones, locking them together, **characterized in that** the metal strip has a single row of gripping projections arranged adjacent both ends of the metal strip, the locking edges being oriented to form a relatively small sharp angle (α) with the direction perpendicular to the longitudinal direction of the metal strip in a plane parallel to the surface of the metal strip and in angles skewed in opposite directions at opposite ends of the metal strip so that when pushing the metal strip in the grooves (5) the edges engage the sides of the grooves (5), locking the stone parts together.

2. Fixing device as defined in claim 1, **characterized in that** the locking edges (8) consist of lips (6) formed by punching from the metal strip.

3. Fixing device as defined in claim 1, **characterized in that** the locking edges (8) consist of protrusions (7) machined in the metal strip.

4. Fixing device as defined in any one of claims 1 - 3, **characterized in that** locking edges (8) are provided on both surfaces of the metal strip.

5. Fixing device as defined in any one of claims 1 - 4, **characterized in that** the fixing device comprises straight ends (9,10) provided with locking edges (8) and a middle portion (11) which can be bent in its lengthwise direction to allow joints to be made between stone parts at corners or otherwise in different directions.

6. Fixing device as defined in any one of claims 1 - 5, **characterized in that** the metal strip comprises a guiding part (12) which remains outside the grooves (5), serving to guide the stones above the joined stone parts into position.

## Patentansprüche

1. Verbindungsvorrichtung zum Verbinden aneinandergrenzender Steinstücke miteinander, z.B. in Specksteinstrukturen, wobei die Verbindungsvorrichtung aus einem länglichen Metallstreifen besteht, der mit Greifvorsprüngen (1) versehen ist, die aus einer Reihe von scharfen und geraden Sperrkanten (8) auf der Oberfläche des Metallstreifens bestehen, welcher Streifen in Nuten (5) eingebracht werden kann, die in die Steinstücke eingearbeitet sind, so daß die Greifvorsprünge mit den Steinen in Eingriff treten und diese gegeneinander fixieren, **dadurch gekennzeichnet, daß** der Metallstreifen eine einzelne Reihe aus Greifvorsprüngen hat, die benachbart den beiden Enden des Metallstreifens angeordnet sind, wobei die Sperrkanten so orientiert sind, daß sie einen relativ kleinen scharfen Winkel (α) mit der Richtung senkrecht zur Längsrichtung des Metallstreifens in einer Ebene parallel zu der Oberfläche des Metallstreifens bilden, und mit Winkeln, die in entgegengesetzten Richtungen an entgegengesetzten Enden des Metallstreifens so abgeschrägt sind, daß, wenn der Metallstreifen in die Nuten (5) geschoben wird, die Kanten mit den Seiten der Nuten (5) in Eingriff treten, wodurch die Steinstücke gegeneinander fixiert werden.

2. Verbindungsvorrichtung nach Anspruch 1, **dadurch gekennzeichnet, daß** die Sperrkanten (8) aus Lippen (6) bestehen, die durch Stanzen aus dem Metallstreifen gebildet sind.

3. Verbindungsvorrichtung nach Anspruch 1, **dadurch gekennzeichnet, daß** die Sperrkanten (8) aus Vorsprüngen (7) bestehen, die in den Metallstreifen gearbeitet sind.

4. Verbindungsvorrichtung nach einem der Ansprüche 1 bis 3, **dadurch gekennzeichnet, daß** die Sperrkanten (8) auf beiden Oberflächen des Metallstreifens vorgesehen sind.

5. Verbindungsvorrichtung nach einem der Ansprüche 1 bis 4, **dadurch gekennzeichnet, daß** die Verbindungsvorrichtung gerade Enden (9, 10), die mit Sperrkanten (8) versehen sind, und einen mittleren Bereich (11), welcher in seiner Längsrichtung gebogen werden kann, um die Herstellung von Verbindungen zwischen Steinstücken an Ecken oder in anderer Weise in verschiedenen Richtungen zu ermöglichen, aufweist.

6. Verbindungsvorrichtung nach einem der Ansprüche 1 bis 5, **dadurch gekennzeichnet, daß** der Metallstreifen einen Führungsteil (12) aufweist, welcher außerhalb der Nuten (5) bleibt und zum Führen der Steine über die verbundenen Steinstücke in ihre Position dient.

## Revendications

1. Dispositif de fixation pour fixer des blocs de pierre adjacents l'un à l'autre, par exemple dans des structures en stéatite, ce dispositif de fixation consistant en une bande métallique allongée munie de saillies d'accrochage (1) consistant en une série d'arêtes de verrouillage (8) droites et acérées sur la surface de la bande métallique, laquelle bande peut être placée dans des rainures (5) usinées dans les blocs de pierre de sorte que les saillies d'accrochage viennent en prise avec les pierres, en les verrouillant ensemble, **caractérisé en ce que** la bande métallique possède une seule rangée de saillies d'accrochage agencées près des deux extrémités de la bande métallique, les arêtes de verrouillage étant orientées pour former un relativement petit angle aigu (α) avec la direction perpendiculaire à la direction longitudinale de la bande métallique dans un plan parallèle à la surface de la bande métallique et suivant des angles inclinés dans des directions opposées aux extrémités opposées de la bande métallique, de sorte que lorsqu'on pousse la bande métallique dans les rainures (5) les arêtes viennent en prise avec les côtés des rainures (5), en verrouillant les blocs de pierre ensemble.

2. Dispositif de fixation selon la revendication 1, **caractérisé en ce que** les arêtes de verrouillage (8) consistent en des lèvres (6) formées par découpage à la presse à partir de la bande métallique.

3. Dispositif de fixation selon la revendication 1, **caractérisé en ce que** les arêtes de verrouillage (8) consistent en des saillies (7) usinées dans la bande métallique.

4. Dispositif de fixation selon l'une quelconque des revendications 1 à 3, **caractérisé en ce qu'**il est prévu des arêtes de verrouillage (8) sur les deux surfaces de la bande métallique.

5. Dispositif de fixation selon l'une quelconque des revendications 1 à 4, **caractérisé en ce que** le dispositif de fixation comprend des extrémités droites (9, 10) munies d'arêtes de verrouillage (8) et une partie centrale (11) qui peut être cambrée dans sa direction longitudinale pour permettre de faire des joints entre blocs de pierre à des angles ou autrement dans des directions différentes.

6. Dispositif de fixation selon l'une quelconque des revendications 1 à 5, **caractérisé en ce que** la bande métallique comprend une partie de guidage (12) qui reste à l'extérieur des rainures (5) servant à guider les pierres au-dessus des blocs de pierre joints en position.
